# EUROPÄISCHE PATENTSCHRIFT

(11) **EP 1 836 458 B1**
(45) Veröffentlichungstag und Bekanntmachung des Hinweises auf die Patenterteilung: **26.02.2014**
(21) Anmeldenummer: 05815820.5
(22) Anmeldetag: 09.12.2005
(51) Int. Cl.: G01C 19/56, H03B 5/30

(54) **SCHWINGKREIS**
OSCILLATING CIRCUIT
CIRCUIT OSCILLANT

(30) Priorität: 05.01.2005 DE 102005000745
(43) Veröffentlichungstag der Anmeldung: 26.09.2007
(73) Patentinhaber: Robert Bosch GmbH, 70442 Stuttgart (DE)
(72) Erfinder: SCHWARZ, Hans-Dieter, 72336 Balingen (DE); GANGEI, Arnd, 72800 Eningen (DE); BAUER, Wolfram, 72074 Tuebingen (DE); WUCHER, Gerhard, 72762 Reutlingen (DE); LANG, Christoph, Palo Alto, 94304 (CA); ESCH, Ermin, 72124 Pliezhausen (DE); VEITH, Michael, 72766 Reutlingen (DE); MAYER, Thomas, 72138 Kirchentellinsfurt (DE); BROCKMANN, Markus, 72074 Tuebingen (DE)
(86) Internationale Anmeldenummer: PCT/EP2005/056658
(87) Internationale Veröffentlichungsnummer: WO 2006/072531

(56) Entgegenhaltungen:
- EP-A- 0 642 216
- WO-A-2004/023075
- WO-A-2004/046650
- PATENT ABSTRACTS OF JAPAN Bd. 1999, Nr. 03, 31. März 1999 (1999-03-31) -& JP 10 332381 A (NGK INSULATORS LTD), 18. Dezember 1998 (1998-12-18)

## Beschreibung

### Stand der Technik

Die Erfindung geht aus von einem Schwingkreis mit einem analogen Schwingungselement.

Die im Folgenden beschriebene Erfindung wird am Beispiel eines Drehratensensors vorgestellt. Prinzipiell ist sie jedoch auf Resonatoren aller Art übertragbar.

Vielen Drehratensensoren liegt als Meßprinzip die Nutzung des Corioliseffekts zugrunde. Die Corioliskraft entsteht, wenn sich ein Körper der Masse m mit der Geschwindigkeit v bewegt und senkrecht zur Bewegungsrichtung eine Drehrate Ω wirkt F_{Coriolis}=2mv×Ω.

Eine Möglichkeit, eine Masse in Bewegung zu versetzen, besteht darin, sie zu einer Schwingung anzuregen, der Antriebsschwingung.
Wirkt eine Drehrate auf die schwingende Masse, so reagiert sie aufgrund der Corioliskräfte mit einer Coriolisschwingung senkrecht zur Antriebsschwingung.
Wird die Mechanik mit einer Elektronik zu einem Schwingkreis kombiniert, so entsteht ein Resonator und die Frequenz dieser Antriebsschwingung entspricht der Antriebsresonanzfrequenz der Mechanik. Im Stand der Technik ist diese Elektronik analog ausgeführt.

In der Schrift von A. Thomae, R. Schellin, M. Lang, W. Bauer, J. Morhaupt, G. Bischopink, L. Tanten, H. Baumann, H. Emmerich, S. Pinter, J. Marek, K. Funk, G. Lorenz, R. Neul: "A Low Cost Angular Rate Sensor in Si-Surface Micromechaning Technology for Automotive Applications", SAE, 1999 wird ein Drehratensensor vorgestellt, welcher nach diesem Prinzip funktioniert. In diesem Mikrosystem führt die Auslenkung der beweglichen Sensormasse zu einer Kapazitätsänderung an mikromechanischen Detektionselektroden. Diese Kapazitätsänderungen werden von einer analogen Elektronik erfasst. Über einen analogen Regler wird eine Spannung erzeugt, welche an weitere Elektroden am Sensorelement, die Antriebselektroden, angelegt wird. Diese Spannung erzeugt im Sensorelement eine elektrostatische Kraft. Wenn die periodische Antriebskraft in einer geeigneten Phasenbeziehung zu der über die Detektionselektroden gemessenen Schwingung der beweglichen Masse steht, erfolgt die Antriebsschwingung mit einer durch den Regler kontrollierten Amplitude. Beim Einschalten der Versorgungsspannung dieses Mikrosystems muss davon ausgegangen werden, dass die bewegliche Masse des Sensorelementes sich in Ruhe befindet. Da die Elektronik des beschriebenen Systems völlig analog, also wertekontinuierlich ist, kann dieses System ähnlich wie ein Quarzoszillator aus dem Rauschen heraus auf der Resonanzfrequenz des Sensorelementes anschwingen.

Die Druckschrift EP0 642 216 A1 offenbart einen Schwingkreis mit einem analogen Oszillator und einem Antriebspfad, welcher Analog-Digital- und Digital-AnalogWandler aufweist.

### Vorteile der Erfindung

Die Erfindung geht aus von einem Schwingkreis mit einem analogen Schwingungselement. Der Kern der Erfindung besteht darin, dass der Schwingkreis wenigstens ein analog zu digital wandelndes Mittel enthält.

Erfindungsgemäß ist der Schwingkreis mit einem mechanischen Schwinger als Schwingungselement versehen und mit einem elektrischen Antriebspfad der mit dem mechanischen Schwinger wechselwirkt. Dabei enthält der elektrische Antriebspfad ein analog zu digital wandelndes Mittel. Durch den digitalen Ansatz sind gegenüber herkömmlicher analoger Signalverarbeitung Vorteile hinsichtlich Temperaturabhängigkeit, Langzeitdrift, EMV und Stromverbrauch erzielbar. Ein weiterer Grund für den digitalen Ansatz liegt darin, dass dieser bei modernen dicht packenden Halbleiterherstellungsprozessen zu einer Reduktion der Chipfläche und damit zu einer Kostenersparnis führt.

Eine vorteilhafte Ausgestaltung sieht vor, dass das Schwingungselement ein mikromechanischer Schwinger ist. Bei mikromechanischen Schwingkreisen ist der oben geschilderte Vorteil von Kostenersparnis durch Packungsdichte besonders groß.

Vorteilhaft ist weiterhin, dass der Schwingkreis wenigstens ein digital zu analog wandelndes Mittel enthält. Dadurch kann im Antriebspfad ein Antriebssignal passender Größe erzeugt werden.

Vorteilhaft ist auch, dass der Schwingkreis ein Filter, insbesondere ein digitales Filter, zur Unterdrückung von Signalen außerhalb eines Nutzfrequenzbandes aufweist. Durch Filter können Störungen aus dem Antriebspfad herausgefiltert werden. Dadurch verbessert sich die Frequenzstabilität des Schwingkreises.

Besonders vorteilhaft ist dazu, dass der Schwingkreis ein Bandpaßfilter, insbesondere ein digitales Bandpaßfilter, zur Unterdrückung von Signalen außerhalb eines Nutzfrequenzbandes aufweist. Vorteilhaft unterdrückt das Herausfiltern niederfrequenter Signale einen möglichen Signalversatz (engl.: Offset) des Schwingkreises. Das Herausfiltern hochfrequenter Signale unterdrückt störende Eigenmoden des Schwingkreises mit höherer Frequenz.

Erfindungsgemäß ist weiterhin, dass der Schwingkreis Mittel zur digitalen Auswertung der Schwingungsamplitude, insbesondere von Änderungen des Bit mit dem geringsten Stellenwert, enthält. Vorteilhaft kann hierdurch detektiert werden, ob überhaupt eine Schwingung stattfindet.

Vorteilhaft ist, dass der Schwingkreis Mittel zur digitalen Auswertung der Schwingungsfrequenz, insbesondere Mittel zum Abzählen von positiven und/oder negativen Nulldurchgängen enthält. Vorteilhaft kann durch Auswerten der Frequenz festgestellt werden, ob der Schwingkreis in der gewünschten Mode schwingt, oder ob andere Moden anschwingen.

Erfindungsgemäß ist weiterhin, dass der Antriebspfad Mittel zur Messung der Schwingungsamplitude des mechanischen Schwingers, wenigstens ein analog zu digital wandelndes Mittel zur Digitalisierung der Schwingungsamplitude, einen digitalen Amplitudenregler zur Regelung der Schwingungsamplitude und Mittel zum Antrieb des mechanischen Schwingers enthält. Vorteilhaft kann so ein Schwingkreis mit einem weitgehend digitalen Antriebspfad dargestellt werden.

Vorteilhaft ist darüber hinaus, dass der Antriebspfad des erfindungsgemäßen Schwingkreises wenigstens ein digital zu analog wandelndes Mittel zur Erzeugung eines Antriebssignals enthält. Dadurch kann am Ende des weitgehend digitalen Antriebspfads ein analoges Antriebssignal passender Größe erzeugt werden.

Erfindungsgemäß ist weiterhin, dass der Antriebspfad Mittel zur Erregung einer Schwingung aus der Ruhelage des mechanischen Schwingers heraus enthält. Vorteilhaft wird hierdurch das Anschwingen des Schwingkreises mit weitgehend digitalem Antriebspfad erleichtert.

Erfindungsgemäß ist schließlich, dass der Schwingkreis einen Zustandsautomaten enthält, der in Abhängigkeit von der Schwingungsamplitude die Mittel zur Erregung der Schwingung aktiviert. Der Zustandsautomat ermöglicht eine permanente Zustandsüberwachung des Schwingkreises, insbesondere der Schwingung. Ist aus irgendeinem Grund die gewünschte Schwingung nicht (mehr) gegeben, so kann durch den Zustandsautomaten ein erneutes Anschwingen des Schwingkreises veranlasst werden.

Vorteilhaft ist weiterhin, dass die Mittel zur Erregung der Schwingung derart ausgestaltet sind, dass in Abhängigkeit von der Schwingungsfrequenz ein Signal zur Erregung der Schwingung erzeugbar ist. Hierdurch können Störmoden unterdrückt und die gewünschte Schwingungsmode erzwungen werden. Weiterhin können so beim Anschwingen des Schwingkreises für einen kumulierenden Effekt ein solches Signal mehrmals hintereinander zur Erregung phasenrichtig erzeugt werden.

Die Erfindung betrifft weiterhin ein Verfahren zum Betrieb eines Schwingkreises. Der Kern des erfindungsgemäßen Verfahrens zum Betrieb eines Schwingkreises, besteht darin, dass:
- in einem ordentlichen Betriebszustand ein mechanischer Schwinger eine Schwingung mit einer Eigenfrequenz ausführt,
- die Schwingung mit Mitteln zur Messung der Schwingungsamplitude des mechanischen Schwingers zeitaufgelöst gemessen wird,
- mit einem analog zu digital wandelnden Mittel die Schwingungsamplitude digitalisiert wird,
- mit einem digitalen Amplitudenregler aus der digitalisierten Schwingungsamplitude ein digitales Regelsignal zur Regelung der Schwingungsamplitude erzeugt wird,
- aus dem digitalen Regelsignal ein Antriebssignal erzeugt wird,
- das Antriebssignal Mitteln zum Antrieb zugeführt wird, die den mechanischen Schwinger antreiben.

Vorteilhaft ist hierbei, dass der Antriebspfad des Schwingkreises in wesentlichen Teilen digital ausgestaltet werden kann. Durch den digitalen Ansatz sind gegenüber herkömmlicher analoger Signalverarbeitung Vorteile hinsichtlich Temperaturabhängigkeit, Langzeitdrift, EMV und Stromverbrauch erzielbar. Ein weiterer Grund für den digitalen Ansatz liegt darin, dass ein elektrischer, insbesondere mikroelektronisch ausgestalteter Antriebspfad bei modernen dicht packenden Halbleiterherstellungsprozessen zu einer Reduktion der benötigten Chipfläche und damit zu einer Kostenersparnis führt.

Das erfindungsgemäße Verfahren sieht auch vor, dass in einem außerordentlichen Betriebszustand mit zeitlich unveränderlicher digitalisierter Schwingungsamplitude, der mechanische Schwinger mittels wenigstens eines Kraftstoßes zur Schwingung und somit der Schwingkreis zum Übergang in den ordentlichen Betriebszustand angeregt wird. Vorteilhaft wird durch diesen anfänglichen Kraftstoß der Schwinger aus der Ruhelage ausgelenkt und in Schwingung gebracht. Vorteilhaft wird durch die auf den Kraftstoß folgende Auslenkung des Schwingers wenigstens eine Quantisierungsschwelle am Analog-Digital Umsetzer überschritten und somit eine sinnvolle digitale Signalauswertung möglich.

Vorteilhaft ist weiterhin, dass der mechanische Schwinger mittels wenigstens eines zweiten Kraftstoßes zur Schwingung und somit der Schwingkreis zum Übergang in den ordentlichen Betriebszustand angeregt wird, wobei insbesondere vorgesehen ist, dass der wenigstens zweite Kraftstoß eine derartige Phasenlage in Bezug auf den Zeitpunkt der ersten Kraftstoßes und auf die anzuregende Eigenfrequenz des analogen Schwingungselementes aufweist, dass eine positive Rückkopplung der anzuregenden Schwingung erfolgt. Durch die Mitkopplung erfolgt ein weiterer Energieeintrag in den mechanischen Schwinger, so dass die Amplitude der Schwingung sukzessive vergrößert wird. Durch den geeignet gewählten zeitlichen Abstand der Kraftstöße kann vorteilhaft auch die Eigenfrequenz ausgewählt werden, bei welcher der Schwingkreis anschwingen soll.

Eine vorteilhafte Ausgestaltung des erfindungsgemäßen Verfahrens sieht vor, dass während des Anschwingens des Schwingkreises die Antriebsspannung maximiert wird. Vorteilhaft wird hierdurch die Einschwingzeit, also die Zeit von der Inbetriebnahme des Schwingkreises mit ruhendem mechanischen Schwinger bis zum Erreichen eines stationären Schwingungszustandes mit im Wesentlichen gleich bleibender Schwingungsamplitude, minimiert.

Weitere vorteilhafte Ausgestaltungen sind den abhängigen Ansprüchen zu entnehmen.

### Zeichnung

Ausführungsbeispiele der Erfindung sind in der Zeichnung dargestellt und in der nachfolgenden Beschreibung näher erläutert.
Fig. 1 zeigt einen analogen Schwingkreis nach Stand der Technik.
Fig. 2 zeigt einen erfindungsgemäßen Schwingkreis.
Fig. 3 zeigt einen erfindungsgemäßen Schwingkreis mit Anschwingschaltung.
Fig. 4 zeigt einen erfindungsgemäßen Schwingkreis mit Anschwingschaltung und Bandpaßfilter.
Fig. 5 zeigt den zeitlichen Signalverlauf der Schwingungsamplitude und der durch die Anschwingschaltung initiierten Kraftstöße.

### Beschreibung von Ausführungsbeispielen

Anhand der im folgenden beschriebenen Ausführungsformen soll die Erfindung detailliert dargestellt werden.

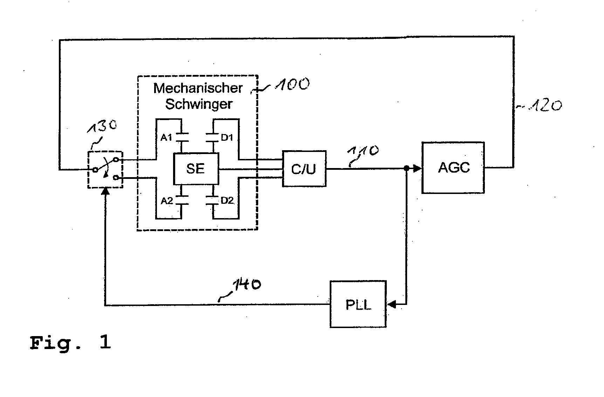

Fig. 1 zeigt einen analogen Schwingkreis nach Stand der Technik am Beispiel eines Antriebsschwingkreises für einen Drehratensensor.

In der Schrift von A. Thomae, R. Schellin, M. Lang, W. Bauer, J. Morhaupt, G. Bischopink, L. Tanten, H. Baumann, H. Emmerich, S. Pinter, J. Marek, K. Funk, G. Lorenz, R. Neul: "A Low Cost Angular Rate Sensor in Si-Surface Micromechaning Technology for Automotive Applications", SAE, 1999 wird ein Drehratensensor vorgestellt, welcher elektromechanisch und vollständig analog funktioniert.

Dargestellt ist ein mechanischer Schwinger 100 mit einem Sensorelement SE welches eine bewegliche, auslenkbare Sensormasse aufweist.

In diesem Mikrosystem führt eine Auslenkung der beweglichen Sensormasse zu Kapazitätsänderungen an mikromechanischen Detektionselektroden, die mit der Sensormasse als Gegenelektrode jeweils Kondensatorstrukturen, nämlich die Detektionskapazitäten D1 und D2 bilden. Diese Kapazitätsänderungen werden von einer analogen Elektronik mit einem Kapazitäts-Spannungs-Umsetzer C/U erfasst und als ein analoges Spannungssignal 110 einem Regler AGC zugeführt. In dem analogen Regler AGC (engl.: automatic gain control) wird eine Antriebsspannung 120 erzeugt, welche über ein Schaltelement 130 an weitere Elektroden am Sensorelement SE angelegt wird, welche mit SE als Gegenelektrode die Antriebskapazitäten A1 und A2 bilden. Die Antriebsspannung 120 erzeugt im Sensorelement SE eine elektrostatische Kraft. Wenn die periodische Antriebskraft in einer geeigneten Phasenbeziehung zu der über die Detektionskapazitäten D1 und D2 gemessenen Schwingung der beweglichen Masse steht, so erfolgt die Antriebsschwingung mit einer durch den Regler AGC kontrollierten Amplitude. Die Phasenbeziehung zwischen der an den Kapazitäten D1 und D2 detektierten Schwingung und den Rückkoppelkräften über die Antriebselektroden A1 und A2 wird mittel eines Phasenregelkreises PLL (engl.: phase locked loop) definiert gesteuert. Dazu wird das analoge Spannungssignal 110 der detektierten Schwingung des Sensorelementes SE dem Phasenregelkreis PLL als Eingangssignal zugeleitet. Der Phasenregelkreis synchronisiert auf diese Schwingung und erzeugt am Ausgang ein Phasensignal 140, welches dem Schaltelement 130 als Steuersignal zugeleitet wird. Das Schaltelement 130 wird daraufhin derart geschaltet, dass die Antriebsspannung 120 an die jeweils geeigneten Antriebselektrode A1 oder A2 angelegt wird.

Beim Einschalten der Versorgungsspannung dieses Mikrosystems ist ein möglicher Fall, dass die bewegliche Masse des Sensorelementes SE sich in Ruhe befindet. Da die Elektronik des beschriebenen Systems völlig analog, also wertekontinuierlich ist, kann dieses System ähnlich wie ein Quarzoszillator aus dem Rauschen heraus auf der Eigenfrequenz des Sensorelementes anschwingen.

In der Sensorik zeichnet sich jedoch der Trend ab, einen möglichst großen Teil der Signalverarbeitung digital auszuführen. Durch den digitalen Ansatz sind gegenüber herkömmlicher analoger Signalverarbeitung Vorteile hinsichtlich Temperaturabhängigkeit, Langzeitdrift, EMV und Stromverbrauch erzielbar. Ein weiterer Grund für den digitalen Ansatz liegt darin, dass dieser bei modernen dicht packenden Halbleiterherstellungsprozessen zu einer Reduktion der Chipfläche und damit zu einer Kostenersparnis führt. Bei der digitalen Signalverarbeitung wird in der Sensorik angestrebt, die Umsetzung aus dem Analogen ins Digitale möglichst weit zu Beginn einer Signalverarbeitungskette durchzuführen.
Auch bei dem Drehratensensor, der als Beispiel für den Einsatz der Erfindung dient, findet die Umsetzung aus dem Analogen ins Digitale sehr früh statt.

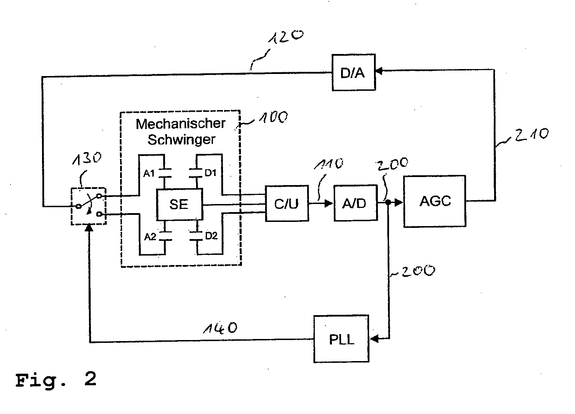

Fig. 2 zeigt einen erfindungsgemäßen Schwingkreis. Es ist ein Blockschaltbild des Antriebskreises eines Drehratensensors als Beispiel für eine erste Ausgestaltung eines erfindungsgemäßen Schwingkreises zu sehen. Dargestellt ist, wie bereits in Fig. 1 gezeigt, das mechanische Sensorelement SE, welches ein analoges Schwingungselement, d.h. ein Element mit wertkontinuierlich veränderlicher Schwingungsamplitude, darstellt und ein elektrischer Antriebspfad. Zwei Elektroden bilden mit dem Sensorelement SE als Gegenelektrode zwei Antriebskapazitäten A1 und A2, welche dazu verwendet werden, die bewegliche mechanische Struktur durch elektrostatische Kräfte in Schwingung zu versetzen. Zwei andere Elektroden bilden mit dem Sensorelement SE die Detektionskapazitäten D1 und D2, die sich gegenphasig bei einer Bewegung des Sensorelements SE ändern. Die beiden Detektionskapazitäten D1 und D2 werden genutzt, um diese Bewegung zu detektieren. Zu diesem Zweck wird die Änderung der Kapazitäten an D1 und D2 durch einen analogen Kapazitäts-Spannungs-Umsetzer C/U in ein analoges Spannungssignal 110 gewandelt. Erfindungsgemäß wird nun dieses analoge Spannungssignal 110 von einem nachfolgenden Analog-Digital-Umsetzer A/D direkt ins Digitale, nämlich in ein digitales Spannungssignal 200 gewandelt. Durch einen nachgeschalteten digitalen Regler AGC (engl.: automatic gain control) wird daraus ein digitales Regelsignal 210 erzeugt, mittels dessen die Amplitude der mechanischen Schwingung auf einen Sollwert geregelt wird. Dazu wird das digitale Regelsignal 210 in diesem Beispiel einem Digital-Analog-Umsetzer D/A zugeführt, welcher dieses Signal in die Antriebsspannung 120 umwandelt. Diese analoge Antriebsspannung 120 wird phasenrichtig an die Antriebskapazitäten A1 bzw. A2 an dem Sensorelement SE angelegt, um die Schwingung der beweglichen Masse aufrecht zu erhalten. Entweder wird die Antriebsspannung 120 an die Kapazität A1 oder an die Kapazität A2 angelegt, wodurch elektrostatische Kräfte auf die bewegliche Sensormasse erzeugt werden, deren Vorzeichen durch die Auswahl der Antriebskapazität definiert ist. Die Phasenbeziehung zwischen der an den Kapazitäten D1 und D2 detektierten Schwingung und den Rückkoppelkräften über die Kapazitäten A1 und A2 muss definiert gesteuert werden. Eine Möglichkeit, dies zu erreichen, ist wiederum der Einsatz eines Phasenregelkreises PLL (engl.: phase locked loop). Der Phasenregelkreis PLL arbeitet im Wesentlichen wie unter Fig. 1 bereits beschrieben. Das Eingangssignal des Phasenregelkreises PLL kann das digitale Spannungssignal 200 sein, wie in diesem Beispiel in der Fig. 2 gezeigt. Das Eingangssignal des Phasenregelkreises PLL kann aber auch das analoge Spannungssignal 110 sein, wie in Fig. 1 dargestellt. Dies ist eine dritte Ausgestaltungsform der Erfindung.

Die bisherige Beschreibung gilt in einem ordentlichen Betriebszustand, nämlich für das bereits schwingende Sensorelement. Bei einem Schwingkreis wie dem in Fig. 2 dargestellten Mikrosystem kann es allerdings ein Problem beim Einschalten der Versorgungsspannung des Systems geben. In einem außerordentlichen Betriebszustand, wie beispielsweise bei Inbetriebnahme des Schwingkreises kann man davon ausgehen, dass die bewegliche Masse des Sensorelementes SE sich in Ruhe befindet. Der Ausgang des Digital-Analog-Umsetzers A/D wird also als digitales Spannungssignal 200 einen konstanten Wert liefern, weil das analoge Rauschen am Eingang des A/D nicht hinreichend ist um eine Quantisierungsschwelle zu überwinden. Der digitale Phasenregelkreis PLL bekommt somit als digitales Spannungssignal 200 ein statisches Eingangssignal, auf welches er nicht synchronisieren kann.

Eine einfachen Abhilfe für dieses Problem besteht darin, bei Inbetriebnahme einen Kraftstoß auf das Sensorelement SE zu geben, so dass die Elektronik die Sprungantwort des Sensorelements detektiert, darauf eine Antriebsspannung 120 generiert, und das System aufgrund dieses Kraftstoßes schließlich anschwingt. Dies funktioniert, wenn die Sprungantwort groß genug ist um eine Quantisierungsschwelle am Eingang des Digital-Analog-Umsetzers A/D zu überschreiten.

Weil der Analog-Digital-Wandler A/D sein Eingangssignal quantisiert, besteht jedoch noch die Möglichkeit, dass das analoge Spannungssignal 110 am Analog-DigitalWandler-Eingang, welche die Sprungantwort des Sensorelements SE beschreibt, zwischen zwei Quantisierungsschwellen des Digital-Analog-Umsetzers A/D hin und her schwingt, ohne diese Quantisierungsschwellen zu überschreiten. Der Ausgang des Digital-Analog-Umsetzers A/D würde dann auch in diesem Fall auf einem statischen Wert verharren und der digitale Schwingkreis würde nicht anschwingen.

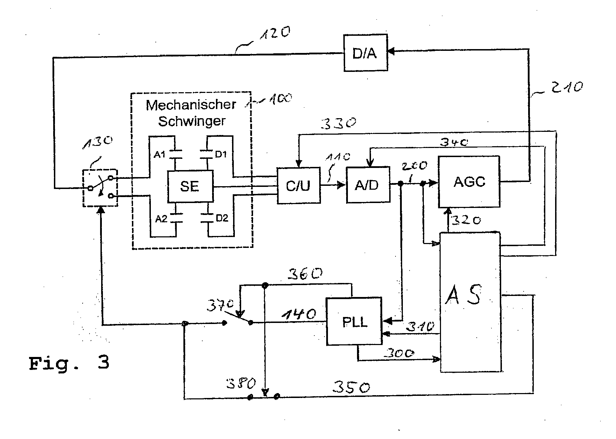

Fig. 3 zeigt einen erfindungsgemäßen digitalen Schwingkreis mit Anschwingschaltung.
In der hier dargestellten vorteilhaften Ausgestaltung des erfindungsgemäßen Schwingkreises ist im Unterschied zur Fig. 2 eine Anschwingschaltung AS zum verbesserten Anschwingen des Schwingkreises vorgesehen, die das oben beschriebene Problem löst.

Von einem Oszillator im Phasenregelkreis PLL wird ein Taktsignal 300 an die Anschwingschaltung AS übertragen. Weiterhin wird das digitale Spannungssignal 200 an die Anschwingschaltung AS übertragen. Von der Anschwingschaltung AS wird ein Freigabesignal 310 an den Phasenregelkreis PLL und ein Reglersteuersignal 320 an den digitalen Regler AGC übertragen. Weiterhin wird von der Anschwingschaltung AS ein Startphasensignal 350 an das Schaltelement 130 übertragen. Im Signalpfad des Startphasensignals 350 ist ein Schaltelement 380 angeordnet. Im Signalpfad des Phasensignals 140 des Phasenregelkreises PLL ist ein Schaltelement 370 angeordnet. Die beiden Schaltelemente 370 und 380 sind mit einem Synchronsignal 360 verbunden, welches von dem Phasenregelkreis PLL erzeugt wird. Das Eingangssignal des Phasenregelkreises PLL kann das digitale Spannungssignal 200 sein, wie in diesem Beispiel in der Fig. 3 gezeigt, oder das analoge Spannungssignal 110, wie in Fig. 1 dargestellt.

Befindet sich der Schwingkreis im außerordentlichen Betriebszustand, wird er beispielsweise gerade in Betrieb genommen, so ist der mechanische Schwinger SE im Wesentlichen in Ruhe. Das analoge Spannungssignal 110 bildet ein zeitlich im Wesentlichen unveränderliches Signal, welches gegebenenfalls Rauschen enthält. Am Analog-Digital Umsetzer A/D werden keine Quantisierungsschwellen überschritten, weshalb das digitale Spannungssignal 200 konstant ist. Das Spannungssignal 200 wird der Anschwingschaltung AS zugeleitet, wo die Nullstellen in diesem Schwingungssignal detektiert werden. Mittels des Taktsignals 300 wird der Abstand der Nullstellen abgezählt. Sind keine Nullstellen vorhanden, so wird der Regler AGC mittels eines Reglersteuersignals 320 auf einem festen Wert gehalten. Dies geschieht beispielsweise indem der Eingang des Reglers AGC auf Null festgehalten wird, und somit am Ausgang des Reglers AGC ein maximales digitales Regelsignal 210 erzeugt wird. Mittels des Digital-Analog Umsetzers D/A wird daraus eine maximale Antriebsspannung 120 erzeugt. Weiterhin wird mittels eines Freigabesignals 310 der Phasenregelkreis PLL außer Betrieb gesetzt. Der Phasenregelkreis PLL ist nicht mehr synchronisiert, weshalb mittels des Synchronsignals 360 das Schaltelement 370 geöffnet und das Schaltelement 380 geschlossen wird. Der Signalpfad des Phasensignals 140 ist nunmehr unterbrochen und der Signalpfad des Startphasensignals 350 ist mit dem Schaltelement 130 verbunden. Die Ansteuerschaltung sendet nun ein erstes Startphasensignal 350 aus, welches das Schaltelement 130 betätigt und durch Anlegen der Antriebsspannung 120 an eine der Antriebskapazitäten A1 oder A2 einen ersten Kraftstoß auf den mechanischen Schwinger SE auslöst. Durch Abzählen des Taktsignals 300 wird, mit geeigneter Phase und Frequenz für den anzuregenden mechanischen Schwinger SE, ein zweiter und gegebenenfalls auch weitere Kraftstöße generiert. Werden am Analog-Digital Umsetzer A/D Quantisierungsschwellen überschritten, und in der Folge von der Anschwingschaltung AS Nullstellen detektiert, so wird von der Anschwingschaltung AS mittels des Freigabesignals 310 der Phasenregelkreis in Betrieb genommen. Der Phasenregelkreis synchronisiert dann auf die Schwingung auf. Sobald dies geschehen ist, schaltet der Phasenregelkreis PLL das Synchronsignal 360 so, dass das Schaltelement 370 geschlossen und das Schaltelement 380 geöffnet wird. Der Signalpfad des Phasensignals 140 ist nunmehr mit dem Schaltelement 130 verbunden und der Signalpfad des Startphasensignals 350 ist unterbrochen. Damit übernimmt der Phasenregelkreis PLL die Phasenregelung des Schwingkreises und der ordentliche Betriebszustand ist erreicht. Die Ansteuerschaltung AS überwacht anhand des digitalen Spannungssignals 200 weiterhin die Amplitude und die Frequenz der Schwingung durch Detektieren der Nullstellen und Abzählen der Abstände zwischen diesen Nullstellen. Im Folgenden werden Details des erfindungsgemäßen Schwingkreises und des erfindungsgemäßen Betriebsverfahrens für solche Schwingkreise anhand der gezeigten Ausführungsbeispiele näher erläutert.

Die Anschwingschaltung AS dient dazu, nach dem Einschalten der Versorgungsspannung des elektrischen Antriebspfades des Schwingkreises einen definierten Kraftstoß auf den mechanischen Schwinger, nämlich das Sensorelement SE zu geben, die Antwort des Sensorelements SE, welche eine abklingende Schwingung mit der Sensorresonanzfrequenz sein wird, zu erfassen und phasenrichtig einen weiteren Kraftstoß auf das Sensorelement zu geben.

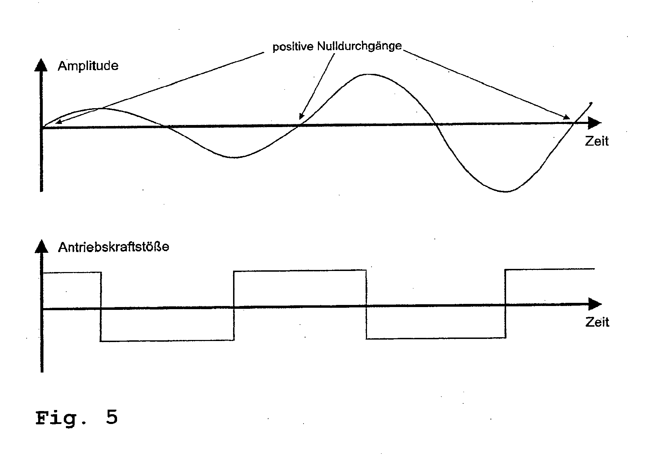

Erfindungsgemäß misst die Anschwingschaltung AS die Zeit zwischen zwei gleichgerichteten Nulldurchgängen der Sensorschwingung. Im Folgenden wird beispielhaft der positive Nulldurchgang als Referenz gewählt. Der positive Nulldurchgang ist in Fig. 5 markiert und damit beispielhaft definiert.
Durch das Messen der Zeit zwischen zwei positiven Nulldurchgängen kann die Periodendauer berechnet werden. Ausgehend von dieser ersten gemessenen Periodendauer errechnet die Anschwingschaltung AS den Zeitpunkt in der zweiten Schwingerperiode, welche auf die zur Messung verwendeten ersten Schwingerperiode folgt, zu dem ein weiterer Kraftstoß phasenrichtig auf das Sensorelement SE gegeben werden muss. Auch die Länge der zweiten Periodendauer wird von der Anschwingschaltung AS vermessen und das Ergebnis wird wiederum zum Berechnen der Kraftstöße in der dritten Schwingerperiode verwendet.

Das Messen der Periodendauer geschieht erfindungsgemäß, indem ein elektronischer Zähler in der Anschwingschaltung AS mit einem Referenztakt gespeist wird, welcher eine Frequenz hat, die deutlich größer als die Antriebsschwingungsfrequenz oder Eigenfrequenz des Sensorelements SE ist. In dem in der Fig. 3 beschriebenen Ausführungsbeispiel ist dies das von dem Oszillator im Phasenregelkreis PLL der Anschwingschaltung AS zugeleitete Taktsignal 300. Mit jedem neuen positiven Nulldurchgang des digitalen Spannungssignals 200 wird ein Zähler in der Anschwingschaltung AS zurückgesetzt und die Zählung startet neu.

Um die Schwingbedingung des erfindungsgemäßen Mikrosystems aus Mechanik und wenigstens teilweise digitaler Elektronik zu erfüllen, muss hinreichend viel Energie vom elektrischen Antriebspfad in den mechanischen Schwinger SE übertragen werden, um alle erdenklichen Energieverluste am mechanischen Schwinger SE auszugleichen. Dazu muss der an der Antriebskapazität A1 oder A2 mittels der Antriebsspannung 120 erzeugte periodische Antriebskraftstoß eine geeignete Phasenbeziehung zur Schwingung der beweglichen Masse des Sensorelements SE aufweisen. Für eine maximale Energieübertragung ist eine Phasenverschiebung von 90° geeignet. Dieser Zusammenhang ist in Fig. 5 illustriert.

Fig. 5 zeigt den zeitlichen Signalverlauf der Schwingungsamplitude und der durch die Anschwingschaltung initiierten Kraftstöße. Im oberen Diagramm ist die Schwingungsamplitude der beweglichen Masse des Sensorelements SE über der Zeit dargestellt wie sie im Wesentlichen auch durch das analoge Spannungssignal 110 repräsentiert ist. Die positiven Nulldurchgänge der Schwingung sind markiert. Im unteren Diagramm sind Antriebskraftstöße in passender zeitlicher Zuordnung für eine maximale Energieübertragung an die oben dargestellte Schwingung eingezeichnet.

Der Beginn des Kraftstoßes ist um 90° phasenverschoben gegenüber dem positiven Nulldurchgang der Sensorschwingung. Erfindungsgemäß wird der Zeitpunkt des Starts des Antriebskraftstoßes bestimmt, indem der Zählerstand, welcher die Länge der zuletzt gemessenen Schwingerperiodendauer repräsentiert, durch den Wert 4 geteilt wird. Wenn der in der aktuell verlaufenden Messung der Schwingerperiodendauer hochlaufende Zähler diesen berechneten Wert erreicht, wird der Antriebskraftstoß eingeleitet, indem eine entsprechende Antriebsspannung 120 über die passende Antriebselektrode A1 oder A2 an das Sensorelement SE gelegt wird. Diese Schaltungsrealisierung hat die Eigenschaft, dass das Messergebnis der Periodendauer keine physikalische Zeit darstellt, sondern lediglich eine Zahl von Takten. Die Periodendauer dieser Takte muss nicht exakt definiert sein. Dies bringt den Vorteil, dass ein sehr einfacher Taktgenerator eingesetzt werden kann. Die Stabilitätsanforderung an den Zählertakt reduziert sich darauf, dass der Zählertakt sich von Schwingerperiode zu Schwingerperiode nur mäßig ändern darf. In einer einfachen Ausgestaltung der Erfindung wird die Division durch den Wert 4 hardwareeffizient realisiert, indem das digitale Wort, welches den Zählerstand repräsentiert, um 2 Stellen nach rechts verschoben wird, wodurch die Wertigkeit der Bits dieses Wertes um den Faktor 4 reduziert wird.

Der Initialisierungskraftstoß auf das Sensorelement SE, der analoge Verstärker im Kapazitäts-Spannungs-Wandler C/U vor dem Analog-Digital-Umsetzer A/D und die Quantisierungsschwellen des Analog-Digital-Umsetzers A/D müssen so dimensioniert sein, dass als Folge des Kraftstoßes auf jeden Fall mindestens eine Quantisierungsschwelle des Analog-Digital-Umsetzers A/D überschritten wird.
Falls die Verstärkungen des analogen Verstärkers im Kapazitäts-Spannungs-Wandler C/U und des Analog-Digital-Umsetzers A/D von den Dimensionierungen abweichen, welche für den eingeschwungenen Systemzustand vorgesehen sind, werden erfindungsgemäß umschaltbare Verstärkungen realisiert.

Die Dimensionierung der Verstärkungen des analogen Verstärkers im Kapazitäts-Spannungs-Wandler C/U und des Analog-Digital-Umsetzers A/D erfolgt erfindungsgemäß indem direkt nach dem Einschalten der Versorgungsspannung für beide Blöcke die maximale Verstärkung eingestellt wird. Mit zunehmender Schwingeramplitude der Mechanik werden ereignisgesteuert die Verstärkungen stufenweise verringert. Dies geschieht im Beispiel gemäß Fig. 3 mittels eines Verstärkersteuersignals 330, welches die Verstärkung des analogen Verstärkers im Kapazitäts-Spannungs-Wandler C/U umschaltet und mittels eines Digitalverstärkersteuersignals 340, welches die Verstärkung des Analog-Digital-Umsetzers A/D umschaltet. Die Verringerung der Verstärkung des analogen Verstärkers im Kapazitäts-Spannungs-Wandler C/U kann getrennt von der Verringerung der Verstärkung des Analog-Digital-Umsetzers A/D erfolgen. Beim Verringern der Verstärkungen wird erfindungsgemäß sichergestellt, dass die mechanische Schwingung des Sensorelements immer dafür sorgt, dass am Analog-Digital-Umsetzer A/D Quantisierungsschwellen überschritten werden.

Durch das Umschalten der Verstärkung im Kapazitäts-Spannungs-Wandler C/U besteht je nach Ausführung die Gefahr, dass die Phasenverschiebung, welche durch den analogen Kapazitäts-Spannungs-Wandler C/U verursacht wird, abhängig von der eingestellten Verstärkung ist.
In diesem Fall wird erfindungsgemäß die im analogen Kapazitäts-Spannungs-Wandler C/U auftretende Phasenverschiebung durch den Digitalteil der Anschwingschaltung AS kompensiert.
Dies kann beispielsweise realisiert werden, indem der berechnete Zählerstand, zu dem ein Kraftstoß auf das Sensorelement gegeben werden soll, um einen Offsetwert verändert wird, welcher die Phasenverschiebung durch den analogen Kapazitäts-Spannungs-Wandler C/U kompensiert.

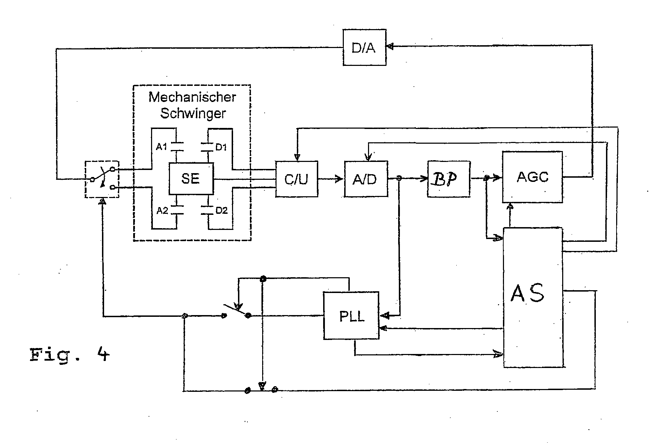

Fig. 4 zeigt einen erfindungsgemäßen digitalen Schwingkreis mit Anschwingschaltung und Bandpaßfilter. Um Nulldurchgänge der mechanischen Schwingung unabhängig von einem möglichen Signalversatz (engl.: Offset) erkennen zu können, ist in dieser Ausgestaltung der Erfindung, zusätzlich zu der aus Fig. 3 bekannten Anordnung, ein Bandpaßfilter BP im elektrischen Antriebspfad, genauer in der elektronischen Kette zwischen Mechanik und dem elektronischen Nulldurchgangsdetektor vorgesehen. Das Bandpaßfilter BP bietet zusätzlich die Vorteile, dass Störungen im Frequenzbereich oberhalb der Antriebsresonanzfrequenz ebenfalls unterdrückt werden.

Eine mögliche Anordnung für das Bandpaßfilter BP im elektrischen Antriebspfad stellt die Position direkt nach dem Analog-Digital Umsetzer A/D dar. Gerade im Hinblick auf zukünftige hochpackende Halbleiterherstellungsprozesse bietet diese erfindungsgemäße Position den Vorteil, dass durch die digitale Ausführung Chipfläche gespart werden kann, dass keine Temperaturabhängigkeit besteht und dass keine Langzeitdriften und geringe EMV-Probleme zu befürchten sind.

Die beschriebene ereignisgesteuerte Umschaltung der Verstärkungen kann erfindungsgemäß durch einen digitalen Zustands-Automaten abgebildet werden. In den Ausführungsbeispielen gemäß der Fig. 3 und 4 ist dieser Zustandsautomat oder dieses Steuerwerk in der Ansteuerschaltung AS enthalten.
Wenn die mechanische Schwingeramplitude hoch genug ist und definierte Schwellen überschreitet, findet ein Sprung von einem Zustand zum nächsten statt, wobei ein entsprechender Eingriff auf die Verstärkungen im analogen Verstärker im Kapazitäts-Spannungs-Wandler C/U beziehungsweise im Analog-Digital Umsetzer A/D erfolgt. Es besteht die Gefahr, dass zum Beispiel aufgrund einer elektromagnetischen Störung ein unberechtigter Zustandsübergang erfolgt. Deshalb müssen in jedem Zustand Rücksprungbedingungen vorgesehen sein, welche dafür sorgen, dass in dem Fall, in welchem am Eingang des Analog-Digital Umsetzers A/D keine Quantisierungsschwellen mehr überschritten werden und entsprechend am Ausgang des Bandpaßfilters BP keine Nulldurchgänge mehr erkannt werden, ein Rücksprung in den außerordentlichen Betriebszustand erfolgt.

Während der Anschwingphase des elektromechanischen Oszillators wird die Spannung zum Erzeugen der Kraftstöße auf das Sensorelement SE erfindungsgemäß maximal gewählt. Dies ist so lange der Fall, bis die Schwingeramplitude einen Schwellwert überschritten hat. Erfindungsgemäß wird dieser Schwellwert so nah an die Sollamplitude der Schwingung gelegt, dass während eines Großteils der Anschwingphase die Höhe der Kraftstöße auf das Sensorelement SE maximal bleibt.
In den beschriebenen Ausführungsbeispielen eines erfindungsgemäßen Schwingkreises in Form eines elektromechanischen Oszillators ist die Dauer der Anschwingphase durch die fortgesetzte Anregung mit Kraftstößen maximaler Höhe minimal. Solange die Schwingeramplitude den Schwellwert noch nicht überschritten hat, wird der Eingang des digitalen Reglers AGC auf Null festgehalten.
Erfindungsgemäß wird erst nach dem Überschreiten des Schwellwertes für die Schwingeramplitude der Regler AGC zum Einregeln der Schwingeramplitude freigegeben.

In Fig. 2 ist ein Blockschaltbild dargestellt, welches als Beispiel für den Antriebskreis in einem Drehratensensor dienen soll. Die Ansteuerung der PLL in solch einem Antriebskreis wird erfindungsgemäß folgendermaßen durch die Anschwingschaltung AS gesteuert.
Zu Beginn des Anschwingens ist der Phasenregelkreis PLL nicht freigegeben und die von der PLL erzeugten Takte werden von einem Oszillator abgeleitet, der mit konstanter Frequenz schwingt. Erst wenn die mechanische Schwingung die für das Überschreiten von Quantisierungsschwellen des Analog-Digital Umsetzers A/D notwendige Schwellamplitude überschritten hat, wird der Phasenregelkreis PLL freigegeben und kann auf die Schwingerfrequenz einrasten. Dies bringt den Vorteil, dass während des Anschwingens die Taktverhältnisse klar definiert sind und getaktete Analogschaltungen ausreichend Zeit zum Einschwingen haben, wodurch alle Verstärkungen im Analogteil des Antriebskreises definiert sind. Wenn der Phasenregelkreis PLL synchronisiert ist, wird die zeitliche Steuerung der Kraftstöße auf das Sensorelement SE auch vom der Phasenregelkreis PLL übernommen.

Ziel ist, dass der elektromechanische Oszillator auf der Antriebsresonanzfrequenz des Sensorelements SE anschwingt. Dieses Ziel ist gefährdet, wenn das Sensorelement SE mehrere Eigenmoden hat, auf denen der Oszillator ebenfalls anschwingen könnte. In einer vorteilhaften Ausgestaltung der Erfindung wird das Frequenzband, in welchem der elektromechanische Oszillator anschwingen kann, begrenzt auf einen Frequenzbereich, in dessen Zentrum die gewünschte Antriebsresonanzfrequenz liegt. Die Breite des erlaubten Frequenzbereiches in dem Kraftstöße auf das Sensorelement SE gegeben werden dürfen wird erfmdungsgemäß so gewählt, dass die Frequenzen der unerwünschten Eigenmoden außerhalb des erlaubten Frequenzbereiches liegen. Eine beispielhafte Möglichkeit, dies zu realisieren, besteht darin, in das Messen der Periodendauer einzugreifen, welches unter Fig. 3 bereits prinzipiell beschrieben wurde. Die Periodendauer wird gemessen, indem die Anzahl an Referenztakten zwischen zwei positiven Nulldurchgängen durch einen elektronischen Zähler erfasst wird. Erfmdungsgemäß wird nun die Gültigkeit eines detektierten positiven Nulldurchganges vom aktuellen Zustand des Zählers abhängig gemacht. Um zum Beispiel zu hohe Frequenzen auszublenden, werden positive Nulldurchgänge erst ab einem bestimmten Zählerstand (Schwellzählerstand) als gültig akzeptiert. Wenn ein positiver Nulldurchgang detektiert wird, bevor der Schwellzählerstand erreicht ist, wird der Nulldurchgang ignoriert und der Zähler zählt so lange weiter bis ein positiver Nulldurchgang detektiert wird, welcher größer als der Schwellzählerstand ist. Auf diese Art und Weise wird das Anregen einer unerwünschten Sensoreigenmode verhindert.

Der Oszillator wird durch eine Folge von Impulsen beziehungsweise Kraftstößen angeregt. Es besteht die Gefahr, dass die Flanken dieser Impulse durch Überkopplungen die Messung der Schwingeramplitude stören. Gerade während des Anschwingens kann diese Gefahr aufgrund einer extrem geringen Schwingeramplitude gegeben sein. Um hieraus resultierende Probleme zu umgehen, werden erfindungsgemäß die Flanken der Impulse und die Messungen der Amplitude im Zeitbereich getrennt (Zeitmultiplex). Die Messung geschieht zeitdiskret in einem definierten Zeitraum in welchem keine Impulsflanke aktiv ist.

Es sind daneben auch weitere Ausführungsbeispiele denkbar, insbesondere Kombinationen einzelner dargestellter Merkmale der verschiedenen Ausgestaltungen der Erfindung.

## Patentansprüche

1. Schwingkreis mit einem analogen Schwingungselement (SE),
wobei der Schwingkreis wenigstens ein analog zu digital wandelndes Mittel (A/D) enthält,
- mit einem mechanischen Schwinger als Schwingungselement (SE),
- mit einem elektrischen Antriebspfad der mit dem mechanischen Schwinger wechselwirkt,
- wobei der elektrische Antriebspfad ein analog zu digital wandelndes Mittel (A/D) enthält,
- wobei der Schwingkreis Mittel (AS) zur digitalen Auswertung der Schwingungsamplitude, insbesondere von Änderungen des Bit mit dem niedrigsten Stellenwert, enthält,
*-* wobei der Antriebspfad
- Mittel (D1, D2) zur Messung der Schwingungsamplitude des mechanischen Schwingers (SE),
- wenigstens ein analog zu digital wandelndes Mittel (A/D) zur Digitalisierung der Schwingungsamplitude,
- einen digitalen Amplitudenregler (AGC) zur Regelung der Schwingungsamplitude,
- wenigstens ein digital zu analog wandelnden Mittel (D/A) zur Erzeugung eines Antriebssignals
- und Mittel zum Antrieb (A1, A2) des mechanischen Schwingers (SE) enthält, **dadurch gekennzeichnet, dass**
- der Antriebspfad Mittel (AS) zur Erregung einer Schwingung aus der Ruhelage des mechanischen Schwingers (SE) heraus enthält, und dass
- der Schwingkreis einen Zustandsautomaten enthält, der in Abhängigkeit von der Schwingungsamplitude die Mittel (AS) zur Erregung der Schwingung aktiviert.

2. Schwingkreis nach Anspruch 1, **dadurch gekennzeichnet, dass** das Schwingungselement (SE) ein mikromechanischer Schwinger ist.

3. Schwingkreis nach Anspruch 1, **dadurch gekennzeichnet, dass** der Schwingkreis wenigstens ein digital zu analog wandelndes Mittel (D/A) enthält.

4. Schwingkreis nach Anspruch 1, **dadurch gekennzeichnet, dass** der Schwingkreis ein Filter, insbesondere ein digitales Filter, zur Unterdrückung von Signalen außerhalb eines Nutzfrequenzbandes aufweist.

5. Schwingkreis nach Anspruch 4, **dadurch gekennzeichnet, dass** der Schwingkreis ein Bandpaßfilter, insbesondere ein digitales Bandpaßfilter (BP), zur Unterdrückung von Signalen außerhalb eines Nutzfrequenzbandes aufweist.

6. Schwingkreis nach Anspruch 1, **dadurch gekennzeichnet, dass** der Schwingkreis Mittel (AS) zur digitalen Auswertung der Schwingungsfrequenz, insbesondere zum Abzählen von positiven und/oder negativen Nulldurchgängen enthält.

7. Schwingkreis nach Anspruch 6, **dadurch gekennzeichnet, dass** die Mittel (AS) zur Erregung der Schwingung derart ausgestaltet sind, dass in Abhängigkeit von der Schwingungsfrequenz ein Signal zur Erregung der Schwingung erzeugbar ist.

8. Verfahren zum Betrieb eines Schwingkreises, wobei
- in einem ordentlichen Betriebszustand ein mechanischer Schwinger (SE) eine Schwingung mit einer Eigenfrequenz ausführt,
- die Schwingung mit Mitteln (D1, D2) zur Messung der Schwingungsamplitude des mechanischen Schwingers (SE) zeitaufgelöst gemessen wird,
- mit einem analog zu digital wandelnden Mittel (A/D) die Schwingungsamplitude digitalisiert wird,
- mit einem digitalen Amplitudenregler (AGC) aus der digitalisierten Schwingungsamplitude ein digitales Regelsignal (210) zur Regelung der Schwingungsamplitude erzeugt wird,
- aus dem digitalen Regelsignal (210) ein Antriebssignal (120) erzeugt wird,
- das Antriebssignal (120) Mitteln zum Antrieb (A1, A2) zugeführt wird, die den mechanischen Schwinger (SE) antreiben,
**dadurch gekennzeichnet, dass**
- in einem außerordentlichen Betriebszustand mit zeitlich unveränderlicher digitalisierter Schwingungsamplitude, der mechanische Schwinger (SE) mit Mitteln (AS) zur Erregung einer Schwingung aus der Ruhelage mittels wenigstens eines Kraftstoßes zur Schwingung und somit der Schwingkreis zum Übergang in den ordentlichen Betriebszustand angeregt wird.

9. Verfahren nach Anspruch 8 zum Betrieb eines Schwingkreises, **dadurch gekennzeichnet, dass**
- der mechanische Schwinger (SE) mit Mitteln (AS) zur Erregung einer Schwingung aus der Ruhelage mittels wenigstens eines zweiten Kraftstoßes zur Schwingung und somit der Schwingkreis zum Übergang in den ordentlichen Betriebszustand angeregt wird,
- wobei insbesondere vorgesehen ist, dass der wenigstens zweite Kraftstoß eine derartige Phasenlage in Bezug auf den Zeitpunkt des ersten Kraftstoßes und auf die anzuregende Eigenfrequenz des analogen Schwingungselementes (SE) aufweist, dass eine positive Rückkopplung der anzuregenden Schwingung erfolgt.

10. Verfahren nach einem der vorhergehenden Ansprüche zum Betrieb eines Schwingkreises, **dadurch gekennzeichnet, dass** während des Anschwingens des Schwingkreises die Antriebsspannung (120) maximiert wird.

11. Verfahren nach Anspruch 9 zum Betrieb eines Schwingkreises, **dadurch gekennzeichnet, dass** in einem Mittel zur digitalen Auswertung der Schwingungsfrequenz (AS), insbesondere durch Abzählen von positiven und/oder negativen Nulldurchgängen die Phasenlage der Schwingung bestimmt wird, wobei nur Zählergebnisse als gültig bewertet werden, die einer Schwingungsfrequenz in einem festgelegten Frequenzband entsprechen.

12. Verfahren nach einem der vorhergehenden Ansprüche zum Betrieb eines Schwingkreises, **dadurch gekennzeichnet, dass** in einem Mittel zur digitalen Auswertung der Schwingungsamplitude (AS) die digitalisierte Schwingungsamplitude ausgewertet und in Abhängigkeit von dieser Schwingungsamplitude die Verstärkung des analog zu digital wandelnden Mittels (A/D) und insbesondere weiterer analoger Verstärker gesteuert wird.

13. Verfahren nach Anspruch 12, **dadurch gekennzeichnet, dass** verstärkungsabhängige Phasenverschiebungen, die im analog zu digital wandelnden Mittel (A/D) und insbesondere in weiteren analogen Verstärkern auftreten, bei der nachfolgenden Auswertung der digitalisierten Schwingungsamplitude im Mittel zur digitalen Auswertung der Schwingungsfrequenz (AS) kompensiert werden.

14. Verfahren nach Anspruch 13, **dadurch gekennzeichnet, dass** die Kompensation erfolgt, indem die in Abhängigkeit von der gesteuerten Verstärkung bekannte Phasenverschiebung von der im Mittel zur digitalen Auswertung der Schwingungsfrequenz (AS), bestimmten Phasenlage der Schwingung addiert wird.

## Claims

1. Oscillating circuit having an analogue oscillating element (SE),
- the oscillating circuit including at least one analogue-to-digital converting means (A/D),
- having a mechanical oscillator as oscillating element (SE),
- having an electrical drive path which interacts with the mechanical oscillator,
- the electrical drive path including an analogue-to-digital converter means (A/D),
- the oscillating circuit including means (AS) for digital evaluation of the oscillation amplitude, in particular of changes to the bit with the least significance,
- the drive path including
- means (D1, D2) for measuring the oscillation amplitude of the mechanical oscillator (SE),
- at least one analogue-to-digital converting means (A/D) for digitizing the oscillation amplitude,
- a digital amplitude controller (AGC) for controlling the oscillation amplitude,
- at least one digital-to-analogue converting means (D/A) for generating a drive signal,
- and means for driving (A1, A2) the mechanical oscillator (SE),
**characterized in that**
- the drive path includes means (AS) for exciting an oscillation from the rest position of the mechanical oscillator (SE), and **in that**
- the oscillating circuit includes an automatic state system which activates the means (AS) for exciting the oscillation as a function of the oscillation amplitude.

2. Oscillating circuit according to Claim 1, **characterized in that** the oscillating element (SE) is a micromechanical oscillator.

3. Oscillating circuit according to Claim 1, **characterized in that** the oscillating circuit includes at least one digital-to-analogue converting means (D/A).

4. Oscillating circuit according to Claim 1, **characterized in that** the oscillating circuit has a filter, in particular a digital filter, for suppressing signals outside a useful frequency band.

5. Oscillating circuit according to Claim 4, **characterized in that** the oscillating circuit has a bandpass filter, in particular a digital bandpass filter (BP), for suppressing signals outside a useful frequency band.

6. Oscillating circuit according to Claim 1, **characterized in that** the oscillating circuit includes means (AS) for digitally evaluating the oscillation frequency, in particular for counting down from positive and/or negative zero crossings.

7. Oscillating circuit according to Claim 6, **characterized in that** the means (AS) for exciting the oscillation are configured in such a way that a signal for exciting the oscillation can be generated as a function of the oscillation frequency.

8. Method for operating an oscillating circuit, wherein
- in an ordinary operating state, a mechanical oscillator (SE) executes an oscillation with a natural frequency,
- the oscillation is measured on a time-resolved basis with the aid of means (D1, D2) for measuring the oscillation amplitude of the mechanical oscillator (SE),
- the oscillation amplitude is digitized with the aid of an analogue-to-digital converting means (A/D),
- a digital control signal (210) for controlling the oscillation amplitude is generated with the aid of a digital amplitude controller (AGC) from the digitized oscillation amplitude,
- a drive signal (120) is generated from the digital control signal (210), and
- the drive signal (120) is fed to means for driving (A1, A2) which drive the mechanical oscillator (SE),
**characterized in that**
- in an extraordinary operating state with temporally constant digitized oscillation amplitude, the mechanical oscillator (SE) with means (AS) for exciting an oscillation from the rest position is excited to oscillate by means of at least one impulse, and the oscillating circuit is thereby excited to transition into the ordinary operating state.

9. Method according to Claim 8 for operating an oscillating circuit, **characterized in that**
- the mechanical oscillator (SE) with means (AS) for exciting an oscillation from the rest position is excited to oscillate by means of at least a second impulse, and the oscillating circuit is thereby excited to transition into the ordinary operating state,
- it being provided, in particular, that the at least second impulse has such a phase angle with reference to the instant of the first impulse, and with reference to that natural frequency of the analogue oscillating element (SE) which is to be excited that there is a positive feedback of the oscillation to be excited.

10. Method according to one of the preceding claims for operating an oscillating circuit, **characterized in that** the drive voltage (120) is maximized during the build up of the oscillating circuit.

11. Method according to Claim 9 for operating an oscillating circuit, **characterized in that** in a means for digitally evaluating the oscillation frequency (AS), in particular by counting down positive and/or negative zero crossings, the phase angle of the oscillation is determined, only counter results which correspond to an oscillation frequency in a stipulated frequency band being assessed as valid.

12. Method according to one of the preceding claims for operating an oscillating circuit, **characterized in that** in a means for digitally evaluating the oscillation amplitude (AS) the digitized oscillation amplitude is evaluated and the gain of the analogue-to-digital converting means (A/D) is controlled as a function of said oscillation amplitude and, in particular, further analogue amplifiers are controlled.

13. Method according to Claim 12, **characterized in that** gain-dependent phase shifts which occur in the analogue-to-digital converting means (A/D) and, in particular, in further analogue amplifiers, are compensated in the means for digital evaluation of the oscillation frequency (AS) during the subsequent evaluation of the digitized oscillation amplitude.

14. Method according to Claim 13, **characterized in that** the compensation is performed by adding the phase shift, known as a function of the controlled gain, to the phase angle of the oscillation, determined in the means for digital evaluation of the oscillation frequency (AS).

## Revendications

1. Circuit oscillant présentant un élément oscillant analogique (SE), le circuit oscillant contenant au moins un moyen (A/D) qui convertit l'analogique en numérique, un oscillateur mécanique servant d'élément oscillant (SE),
un parcours électrique d'entraînement qui coopère avec l'oscillateur mécanique,
le parcours électrique d'entraînement contenant un moyen (A/D) qui convertit l'analogique en numérique,
le circuit oscillant contenant des moyens (AS) d'évaluation numérique de l'amplitude des oscillations et en particulier des modifications du bit qui correspond à la valeur de réglage la plus basse,
le parcours d'entraînement contenant
des moyens (D1, D2) de mesure de l'amplitude des oscillations mécanique (SE),
au moins un moyen (A/D) qui convertit l'analogique en numérique pour numériser l'amplitude des oscillations,
un régulateur numérique d'amplitude (AGC) qui régule l'amplitude des oscillations,
au moins un moyen (D/A) qui convertit le numérique en analogique pour former un signal d'entraînement et
des moyens d'entraînement (A1, A2) de l'oscillateur mécanique (SE),
**caractérisé en ce que**
le parcours d'entraînement contient des moyens (AS) qui excitent une oscillation de l'oscillateur mécanique (SE) hors de sa position de repos et
**en ce que** le circuit oscillant contient un automate d'état qui active les moyens (AS) d'excitation des oscillations en fonction de l'amplitude des oscillations.

2. Circuit oscillant selon la revendication 1, **caractérisé en ce que** l'élément oscillant (SE) est un oscillateur micromécanique.

3. Circuit oscillant selon la revendication 1, **caractérisé en ce que** le circuit oscillant contient au moins un moyen (D/A) qui convertit le numérique en analogique.

4. Circuit oscillant selon la revendication 1, **caractérisé en ce que** le circuit oscillant présente un filtre, notamment un filtre numérique qui atténue les signaux situés à l'extérieur d'une bande de fréquence utile.

5. Circuit oscillant selon la revendication 4, **caractérisé en ce que** le circuit oscillant présente un filtre passe-bande, notamment un filtre passe-bande numérique (BP) qui atténue les signaux situés à l'extérieur d'une bande de fréquence utile.

6. Circuit oscillant selon la revendication 1, **caractérisé en ce que** le circuit oscillant contient des moyens (AS) d'évaluation numérique de la fréquence des oscillations, qui comptent en particulier les passages positifs et/ou les passages négatifs par zéro.

7. Circuit oscillant selon la revendication 6, **caractérisé en ce que** les moyens (AS) d'excitation des oscillations sont configurés de manière à pouvoir former un signal d'excitation des oscillations en fonction de la fréquence des oscillations.

8. Procédé de conduite d'un circuit oscillant, dans lequel
un oscillateur mécanique (SE) exécute une oscillation à fréquence propre dans un état de fonctionnement correct,
l'oscillation est mesurée à résolution temporelle à l'aide de moyens (D1, D2) de mesure de l'amplitude des oscillations de l'oscillateur mécanique (SE),
un convertisseur (A/D) convertit l'analogique en numérique et numérise l'amplitude des oscillations,
un régulateur numérique d'amplitude (AGC) forme un signal numérique de régulation (210) à partir de l'amplitude numérisée des oscillations pour réguler l'amplitude des oscillations,
un signal d'entraînement (120) est formé à partir du signal numérique de régulation (210) et
le signal d'entraînement (120) est amené à des moyens d'entraînement (A1, A2) qui entraînent l'oscillateur mécanique (SE),
**caractérisé en ce que**
dans un état de fonctionnement non ordinaire, dans lequel l'amplitude numérisée des oscillations ne varie pas dans le temps, l'oscillateur mécanique (SE) est excité à l'aide de moyens (AS) d'excitation d'une oscillation hors de la position de repos et au moyen d'au moins une application brusque de force d'oscillation, pour ainsi exciter le circuit oscillant de telle sorte qu'il passe dans l'état de fonctionnement ordinaire.

9. Procédé de conduite d'un circuit oscillant selon la revendication 8, **caractérisé en ce que** l'oscillateur mécanique (SE) est excité à l'aide de moyens (AS) d'excitation d'une oscillation hors de la position de repos et au moyen d'au moins une deuxième application brusque de force d'oscillation, pour ainsi exciter le circuit oscillant de telle sorte qu'il passe dans l'état de fonctionnement ordinaire,
la ou les deuxièmes applications brusques d'une force présentent un déphasage par rapport à l'instant de la première application brusque d'une force et à la fréquence propre à exciter de l'élément analogique d'oscillation (SE), de telle sorte qu'ait lieu une rétroaction positive de l'oscillation à exciter.

10. Procédé de conduite d'un circuit oscillant selon l'une des revendications précédentes, **caractérisé en ce que** pendant les oscillations du circuit oscillant, la tension d'entraînement (120) est maximisée.

11. Procédé de conduite d'un circuit oscillant selon la revendication 9, **caractérisé en ce que** la phase des oscillations est déterminée dans des moyens (AS) d'évaluation numérique de la fréquence d'oscillation, en particulier par comptage des passages positifs et/ou des passages négatifs par zéro, seuls les résultats du compteur qui correspondent à une fréquence d'oscillation située dans une bande de fréquence définie étant évalués comme valides.

12. Procédé de conduite d'un circuit oscillant selon l'une des revendications précédentes, **caractérisé en ce que** l'amplitude numérisée des oscillations est évaluée dans des moyens (AS) d'évaluation numérique de l'amplitude des oscillations et le renforcement du moyen (A/D) qui convertit l'analogique en numérique et en particulier d'autres amplificateurs analogiques est commandé en fonction de cette amplitude des oscillations.

13. Procédé selon la revendication 12, **caractérisé en ce que** les déphasages en fonction de l'amplification qui surviennent dans le moyen (A/D) qui convertit l'analogique en numérique et en particulier dans d'autres amplificateur analogiques surviennent, sont compensés lors de l'évaluation ultérieure de l'amplitude numérisée des oscillations dans les moyens (AS) d'évaluation numérique de la fréquence d'oscillation.

14. Procédé selon la revendication 13, **caractérisé en ce que** la compensation s'effectue par le fait que le déphasage connu en fonction de l'amplification commandée est ajoutée à la phase des oscillations définie dans les moyens (AS) d'évaluation numérique de la fréquence d'oscillation.
